# EUROPÄISCHE PATENTSCHRIFT

(11) **EP 1 125 012 B1**
(45) Veröffentlichungstag und Bekanntmachung des Hinweises auf die Patenterteilung: **11.02.2004**
(21) Anmeldenummer: 99969457.3
(22) Anmeldetag: 14.09.1999
(51) Int. Cl.: D01F 2/00, D01F 13/02

(54) **VERFAHREN ZUR HERSTELLUNG CELLULOSISCHER FORMKÖRPER**
METHOD FOR PRODUCING CELLULOSIC FORMS
PROCEDE DE PRODUCTION DE CORPS MOULES CELLULOSIQUES

(30) Priorität: 17.09.1998 DE 19842557
(43) Veröffentlichungstag der Anmeldung: 22.08.2001
(73) Patentinhaber: Zimmer AG, 60388 Frankfurt am Main (DE)
(72) Erfinder: BAUER, Ralf-Uwe, D-07407 Rudolstadt (DE); NIEMZ, Frank-Günter, D-07407 Rudolstadt (DE)
(74) Vertreter: Brandenburg, Thomas, Dr.
(86) Internationale Anmeldenummer: PCT/DE1999/002977
(87) Internationale Veröffentlichungsnummer: WO 2000/017425

(56) Entgegenhaltungen:
- WO-A-95/16063

## Beschreibung

Die Erfindung betrifft ein Verfahren zur Herstellung cellulosischer Formkörper, insbesondere von Fasern und Filamenten, durch a) Auflösen von Cellulose in einer wässrigen Lösung eines tertiären Aminoxids, insbesondere des N-Methylmorpholin-N-oxids (NMMO), und b) Extrudieren der Celluloselösung durch ein Formwerkzeug über einen Luftspalt in ein Fällbad unter Ausfällung der Formkörper, wobei die Celluloselösung und/oder das Fällbad ein Tensid enthält.

Bekanntlich ist bei der Fasererspinnung die Gefahr der gegenseitigen Kontaktierung der Lösungsstrahlen im Luftspalt und der Verklebung einzelner Fasern umso größer, je größer der Abstand der Düse von der Fällbadoberfläche ist. Dieser Tendenz kann man durch Verringerung der Lochdichte der Spinndüse entgegenwirken, jedoch wird dadurch die Wirtschaftlichkeit beeinträchtigt. Bei der Fasererspinnung mit großen Luftspaltbreiten ist es bekannt, durch Zusätze zur Spinnlösung dieser Verklebungsgefahr zu begegnen und die Spinnbarkeit zu verbessern. So ist aus DD 218 121 der Zusatz von Polyalkylenether zur Celluloselösung bekannt, wobei mit Luftspaltbreiten . von 150 mm gearbeitet wird. Nach DD 286 001 wird bei der Herstellung der Spinnlösung ein Tensid zugesetzt, um die Gleichmäßigkeit und Feinheit des Fadens zu erhöhen. Aus WO 95/16063 ist ein Spinnverfahren bekannt, bei dem zur Verringerung der Fibrillierungsneigung der ersponnenen Fasern dem Fällbad und/oder der Spinnlösung Tenside zugesetzt werden. Dabei liegt die Tensidkonzentration im Fällbad bei mindestens 100 Masse-ppm und in der Spinnlösung bei mindestens 250 Masse-ppm. Die Luftspaltbreite beträgt 40 mm.

Zur Vermeidung der bei großen Luftspaltbreiten auftretenden Mängel und zurErhöhung der Lochdichte der Spinndüse ist es bekannt, den Spinnprozess mit kleineren Spaltbreiten durchzuführen. So ist aus: EP 0 574 870 die Erspinnung von Cellulosefasern nach dem Aminoxid-Verfahren mit Verzug der Lösungsstrahlen in einem Luftspalt einer Breite in dem Bereich von 2 bis 20 mm und mit Abzug durch einen Spinntrichter bekannt. Bei diesen kleinen Spaltbreiten zeigt sich, daß mit abnehmender Spaltbreite bestimmte textilphysikalische Werte der ersponnenen Faser beeinträchtigt werden und die Kardierung zu unbefriedigenden Produkten führt. Die Folge ist, daß die an sich erwünschte Verringerung der Spaltbreite durch die Minderung der Produktqualitäten begrenzt wird.

Aufgabe der Erfindung ist die Schaffung eines Verfahrens zur Herstellung cellulosischer Formkörper nach dem Aminoxid-Verfahren, bei dem die oben genannten, durch die Verengung des Luftspalts bedingten Beeinträchtigungen der Produktqualität vermieden werden. Insbesondere soll die Luftspaltbreite gegenüber den bekannten Verfahren verringert werden, ohne daß es dadurch zu Verschlechterungen oder größeren Schwankungen einzelner textilphysikalischer Eigenschaften der ersponnenen Fasern oder Filamente kommt. Ziel des Verfahrens ist auch eine Erhöhung der Lochdichte, ohne daß es im Luftspalt zu Verklebungen der Kapillaren kommt. Schließlich sollen die ersponnenen Fasern eine bessere Eignung für die Kardierung aufweisen.

Diese Aufgabe wird bei dem eingangs genannten Verfahren erfindungsgemäß dadurch gelöst, daß man in der Stufe b) mit einem Tensidgehalt c der Celluloselösung und/oder des Fällbades in dem Bereich 100 Masse-ppm > c ≥ 5 Masse-ppm und mit einer Luftspaltbreite in dem Bereich von 2 bis 20 mm arbeitet. Überraschenderweise wurde gefunden, daß bei dem erfindungsgemäßen Tensidzusatz die Luftspaltbreite, bei der noch keine Beeinträchtigung der Qualität der Fasern/Filamente oder anderen Formkörper beobachtet wird, erheblich verringert werden kann. Die minimale Spaltbreite, bei der noch keine Beeinträchtigung der textilphysikalischen Werte beobachtet wird, kann um etwa 33 bis 50% verringert werden, so beispielsweise von 6 mm auf 3 mm.

Vorzugsweise extrudiert man die Celluloselösung durch ein Formwerkzeug mit einer Lochdichte in dem Bereich von 1,8 bis 20 mm⁻². Insbesondere liegt die Lochdichte in dem Bereich von 2,0 bis 15 mm⁻². Damit kann im Vergleich zu dem Verfahren nach EP 0 574 870 bei der gleichen Luftspaltbreite eine erhebliche Steigerung der Lochdichte ohne Beeinträchtigung der Faserqualität erreicht werden.

Nach der bevorzugten Ausführungsform des erfindungsgemäßen Verfahrens liegt der Tensidgehalt c in dem Bereich von 8 bis 70 Masse-ppm. Insbesondere arbeitet man in der Celluloselösung mit einem Tensidgehalt c in dem Bereich von 70> c ≥ 30 ppm. Die Luftspaltbreite liegt vorzugsweise in dem Bereich von 2 bis 8 mm. Der gegenseitige Abstand der Lösungsstrahlen am Ausgang des Formwerkzeugs kann ebenfalls verringert werden. Er liegt vorzugsweise in dem Bereich von 0,22 bis 0,7 mm, insbesondere bei 0,5 bis 0,6 mm. Durch das erfindungsgemäße Verfahren kann daher die Produktivität erhöht werden.

Nach der bevorzugten Ausführungsform des erfindungsgemäßen Verfahrens setzt man das Tensid vor der Stufe a) der Cellulose oder in der Stufe a) oder zwischen den Stufen a) und b) zu. Das Tensid kann daher schon in den Stufen der Zellstoffvorbereitung oder Lösungs-- herstellung eingeführt werden. Dabei kann der Tensidzusatz gleichzeitig mit dem Zusatz anderer Hilfsstoffe erfolgen, die ohnehin in den Prozess eingebracht werden, wie z.B. Stabilisatoren.

Bei einer anderen Ausführungsform setzt man das Tensid in oder nach der Stufe b) zu. Das Tensid kann beispielsweise in Form von Aerosolen in den Luftspalt zwischen dem Formwerkzeug und dem Fällbad eingedüst werden. Das Tensid kann auch dem Fällbad selbst oder bei der Aufarbeitung des Fällbades zugefügt werden.

Vorzugsweise wird ein nichtionogenes Tensid eingesetzt. Geeignete nichtionische Tenside sind beispielsweise Fettsäure- oder Fettalkoholpolyetheroxide und Saccharosefettsäureester. Geeignete anionische Tenside sind beispielsweise Fettsäureamin- oder Fettsäurealkylaminverbindungen, Fettsäureglyceridsulfate, N-(C₁₀₋₂₀-acyl)sarcosin-Salze, Fettsäuresulfosuccinate und - amidsulfosuccinate, Fettalkoholsulfate und die ethoxylierten Derivate dieser Verbindungen. Kationische Tenside, die sich eignen, sind beispielsweise quaternäre (C₁₀₋₂₀-alkyl)ammoniumverbindungen. Geeignete amphotere Tenside sind beispielsweise N-(C₁₀₋₂₀-alkyl)-β-aminopropionate und Fettsäure-imidazolin-Derivate.

Vorzugsweise regeneriert man das Fällbad aus der Stufe b) zu einem gereinigten wasserhaltigen Aminoxid, das in Stufe a) wieder eingesetzt wird. Dabei kann das im Fällbad enthaltene Tensid ebenfalls recycliert werden, wenn es unter den chemischen und thermischen Bedingungen der Regeneration und der Stufe a) beständig ist. Wenn dies nicht der Fall ist, kann man das zugesetzte Tensid im Zuge der Regeneration des Fällbads von der Aminoxidlösung abtrennen und in der Stufe b) wieder einsetzen. Das zur Abtrennung benutzte Verfahren hängt u.a. von der Art des Tensids ab. Die Abtrennung kann z.B. mit Hilfe einer Ionenaustauschermembran, einer Umkehrosmosemembran oder durch Wasserdampfdestillation erfolgen. Wenn das Tensid mit dem Aminoxid recycliert wird, darf es das Einsetzen der Aminoxidzersetzung oder des Celluloseabbaus nicht fördern und die Temperatur, bei der dies eintritt, nicht herabsetzen. Außerdem sollte das Lösevermögen des Aminoxids bzw. seines Hydrats gegenüber Cellulose nicht verringert werden.

Das erfindungsgemäße Verfahren wird nun an Hand der Beispiele und Vergleichsbeispiele näher erläutert.

### Vergleichsbeispiel 1

Eine 12%-ige Celluloselösung in N-Methylmorpholin-N-oxid-Monohydrat (NMMO-MH) wurde bei einer Temperatur von 85 °C mit einer Spinngeschwindigkeit von 30 m/min aus einem wässrigen Fällbad mit 20 Masse-% NMMO ersponnen. Es wurde eine Düse mit einem Lochabstand von 0,6 mm und einer Lochdichte von 2,77 mm-² benutzt. Der Luftspalt wurde dabei so lange verringert, bis sich eine merkliche negative Beeinflussung einstellte. Diese wurde bei einer Spaltbreite von 6 mm festgestellt und zeigte sich u.a. durch Störung des Spinnvorgangs infolge von entstehenden Turbulenzen, was letztendlich zum Abriß einzelner Kapillaren führte. Die bei dieser Spaltbreite erhaltenen Fasern wurden nach dem vollständigen Auswaschen, Präparieren und Trocknen bei 100°C textilphysikalischen Prüfungen unterzogen. Ferner wurde eine Kardierung vorgenommen und die dabei auftretenden Faserverklebungen ausgezählt. Die erhaltenen Ergebnisse sind in der Tabelle zusammengefaßt.

### Beispiel 1

Dem Spinnbad des Vergleichsbeispiels 1 wurde ein Kondensat aus 1 Mol Isotridecylalkohol (ITDA) und 10 Molen Ethylenoxid (EO) als nichtionogenes Tensid in einer Konzentration von 10 ppm (Masse) zugesetzt. Es wurde unter den gleichen Bedingungen wie in dem Vergleichsbeispiel 1 gesponnen. Es zeigte sich, daß die Spaltbreite weiter verringert werden konnte. Die minimal einstellbare Spaltbreite wurde zu 3 mm festgestellt, ohne daß es dabei schon zu einer Beeinträchtigung des Spinnprozesses kam.

### Beispiel 2

Es wurde wie in Beispiel 1 gearbeitet, jedoch wurde das ITDA/E0-Kondensat während der Lösungszubereitung in einer Menge von 30 ppm (Masse), bezogen auf Lösung zugegeben. Auch hierbei konnte im Vergleich zu der tensidfreien Fahrweise der kritische Minimalabstand Düse-Badoberfläche von 6 mm auf 3 mm verringert werden.

### Beispiel 3

Es wurde wie in Beispiel 1 gearbeitet, jedoch wurde der Abstand Düse-Fällbadoberfläche wie im Vergleichsbeispiel 1 bei 6 mm belassen. An den erhaltenen Fasern wurden nach dem vollständigen Auswaschen, Präparieren und Trocknen bei 100°C die gleichen Prüfungen wie an den Fasern des Vergleichsbeispiels 1 vorgenommen. Die erhaltenen Zahlenwerte sind in der Tabelle zusammengefaßt.

Aus dem Vergleich dieser Werte mit denen des Vergleichsbeispiels 1 ist ersichtlich, daß die Gleichmäßigkeit der textilphysikalischen Eigenschaften, die sich in den jeweiligen Variationskoeffizienten widerspiegeln, durch den Tensidzusatz zunimmt. Am besten ist der Vorteil des erfindungsgemäßen Verfahrens am Anstieg der Schlingenfestigkeit erkennbar. Während bei den Faserproben des Vergleichsbeispiels Fasern mit Schlingenfestigkeiten des Wertes 0 feststellbar waren, wurden diese bei den Fasern dieses Beispiels nicht festgestellt. Dies wirkte sich auf den Durchschnittswert der Schlingenfestigkeit und auch auf den Variationskoeffizienten aus. Die durch das erfindungsgemäße Verfahren erreichte Verbesserung der Produktqualität ist auch aus den Verklebungen des kardierten Materials erkennbar.

### Vergleichsbeispiel 2

Eine 13%-ige Celluloselösung in N-Methylmospholin-N-oxid-Monohydrat wurde mit einer Spinngeschwindigkeit von 36 m/min aus einem wässrigen Fällbad mit 25 Masse-% NMMO ersponnen. Es wurde eine Düse mit einem Lochabstand von 0,3 mm und einer Lochdichte von 11,1 mm⁻² benutzt. Der Luftspalt wurde dabei solange verringert, bis sich eine merkliche negative Beeinflussung einstellte. Diese wurde bei einer Luftspaltbreite von 6 mm festgestellt und äußerte sich durch zeitweises Verkleben mehrerer Kapillaren und Störungen des Spinnvorgangs infolge von entstehenden Turbulenzen, was letztlich zum Abriß einzelner Kapillaren führte. An den ersponnenen Fasern wurden die gleichen Prüfungen wie in Vergleichsbeispiel 1 vorgenommen. Die Ergebnisse sind in der Tabelle angegeben.

### Beispiel 4

Es wurde wie im Vergleichsbeispiel 2 gearbeitet, jedoch wurden dem Spinnbad 50 ppm (Masse) Dimethyldioctadecylammoniumchlorid (DMDDAC) als kationisches Tensid zugesetzt. Es wurde unter den in Vergleichsbeispiel 2 genannten Bedingungen gesponnen, wobei die Luftspaltbreite verringert wurde. Die minimal einstellbare Spaltbreite, bei der noch keine Beeinträchtigung des Spinnprozesses beobachtet wurde, ergab sich zu 4mm.
Die ersponnenen Fasern wurden den gleichen Prüfungen wie beim Vergleichsbeispiel 2 unterzogen. Die Ergebnisse sind in der Tabelle angegeben.

### Vergleichsbeispiel 3

Eine 11%-ige Celluloselösung in NMMO-MH wurde mit einer Spinngeschwindigkeit von 30 m/min aus einem wässrigen Fällbad mit 30 Masse-% NMMO ersponnen. Es wurde eine Düse mit einem Lochabstand von 0,6 mm und einer Lochdichte von 2,77 mm-² benutzt. Der Luftspalt wurde dabei soweit verringert, bis sich eine merkliche negative Beinflussung einstellte. Diese wurde bei einer Luftspaltbreite von 8 mm festgestellt und äußerte sich durch Störungen des Spinnvorgangs infolge von Turbulenzen, was letztendlich zum Abriß einzelner Kapillaren führte. An den noch nicht negativ beeinflußten Fasern wurden die gleichen Prüfungen wie in Vergleichsbeispiel 1 vorgenommen. Die Ergebnisse sind in der Tabelle angegeben.

### Beispiel 5

Es wurde wie in Vergleichsbeispiel 3 gearbeitet, jedoch wurden dem Spinnbad 50 Masse-ppm Natriumsalz der Dodecylbenzolsulfonsäure (DDBSS) als anionisches Tensid zugesetzt. Während des Spinnens wurde die Luftspaltbreite fortlaufend verringert. Die minimal einstellbare Spaltbreite, bei der es noch nicht zu einer Beeinträchtigung des Spinnprozesses kam, wurde zu 4 mm festgestellt. Es wurden die gleichen Faseruntersuchungen wie in Vergleichsbeispiel 3 durchgeführt. Die Ergebnisse sind in der Tabelle angegeben.

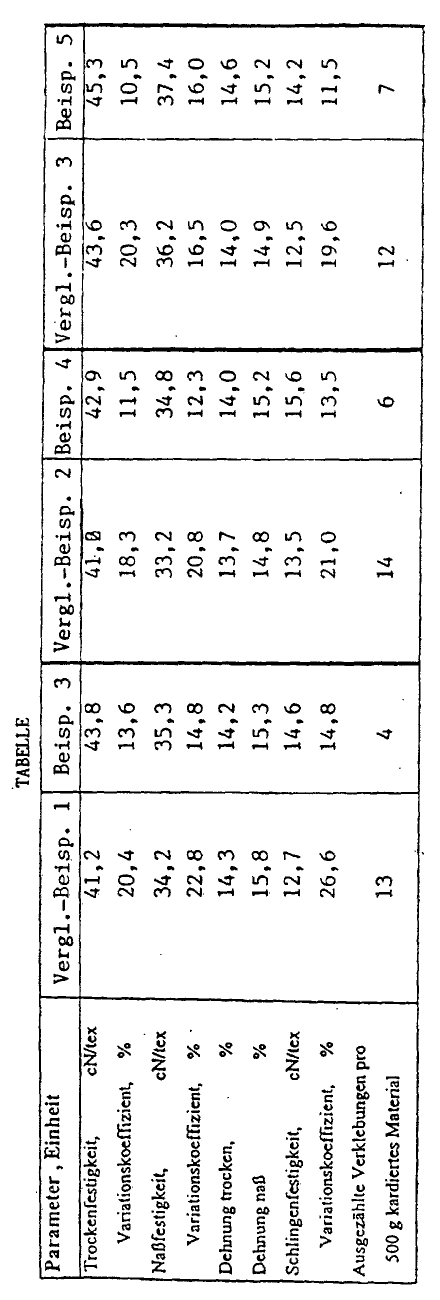

## Patentansprüche

1. Verfahren zur Herstellung cellulosischer Formkörper, insbesondere von Fasern und Filamenten, durch
a) Auflösen von Cellulose in einer wässrigen Lösung eines tertiären Aminoxids, insbesondere des N-Methylmorpholin-N-oxids, und
b) Extrudieren der Celluloselösung durch ein Formwerkzeug über einen Luftspalt in ein Fällbad unter Ausfällung der Formkörper, wobei die Celluloselösung und/oder das Fällbad ein Tensid enthalten,
**dadurch gekennzeichnet, daß** man in der Stufe b) mit einem Tensidgehalt c der Celluloselösung und/oder des Fällbads in dem Bereich 100 ppm> c ≥ 5 ppm und mit einer Luftspaltbreite in dem Bereich von 2 bis 20 mm arbeitet.

2. Verfahren nach Anspruch 1, **dadurch gekennzeichnet, daß** der Tensidgehalt c in dem Bereich von 8 bis 70 ppm liegt.

3. Verfahren nach Anspruch 1 oder 2, **dadurch gekennzeichnet, daß** man in der Celluloselösung mit einem Tensidgehalt c in dem Bereich 70 ppm > c ≥ 30 ppm arbeitet.

4. Verfahren nach einem der Ansprüche 1 bis 3, **dadurch gekennzeichnet, daß** die Luftspaltbreite in dem Bereich von 2 bis 8 mm liegt.

5. Verfahren nach einem der Ansprüche 1 bis 4, **dadurch gekennzeichnet, daß** man mit einem gegenseitigen Abstand der Lösungsstrahlen am Ausgang des Formwerkzeugs in dem Bereich von 0,22 bis 0,7 mm arbeitet.

6. Verfahren nach einem der Ansprüche 1 bis 5, **dadurch gekennzeichnet, daß** man das Tensid vor der Stufe a) der Cellulose oder in der Stufe a) oder zwischen den Stufen a) und b) zusetzt.

7. Verfahren nach einem der Ansprüche 1 bis 5, **dadurch gekennzeichnet, daß** man das Tensid in oder nach der Stufe b) zusetzt.

8. Verfahren nach einem der Ansprüche 1 bis 7, **dadurch gekennzeichnet, daß** man ein nichtionogenes Tensid einsetzt.

9. Verfahren nach einem der Ansprüche 1 bis 8, **dadurch gekennzeichnet, daß** man das Fällbad aus der Stufe b) zu einem gereinigten wasserhaltigen Aminoxid regeneriert, das man in Stufe a) wieder einsetzt.

10. Verfahren nach Anspruch 9, **dadurch gekennzeichnet, daß** man das Tensid im Zuge der Regeneration des Fällbades von der Aminoxid-Lösung abtrennt und in der Stufe b) wieder einsetzt.

11. Verfahren nach einem der Ansprüche 1 bis 10, **dadurch gekennzeichnet, daß** man die Celluloselösung durch ein Formwerkzeug mit einer Lochdichte in dem Bereich von 1,8 bis 20 mm⁻² extrudiert.

## Claims

1. Process for producing formed cellulosic articles, particularly fibres and filaments, comprising
a) dissolving cellulose in an aqueous solution of a tertiary amine oxide, especially N-methylmorpholine N-oxide, and
b) extruding the cellulose solution through an extrusion die via an air gap into a precipitation bath with precipitation of the formed articles, said cellulose solution and/or said precipitation bath containing a tenside,
**characterized in that** in the step b) the tenside content c of the cellulose solution and/or of the precipitation bath is in the range 100 ppm> c ≥ 5 ppm, and the width of the air gap is in the range from 2 to 20 mm.

2. Process according to claim 1 **characterized in that** the tenside content c is in the range from 8 to 70 ppm.

3. Process according to claim 1 or 2 **characterized in that** the tenside content c in the cellulose solution is in the range 70 ppm > c ≥ 30 ppm.

4. Process according to any of the claims 1 to 3 **characterized in that** the width of the air gap is in the range from 2 to 8 mm.

5. Process according to any of the claims 1 to 4 **characterized in that** the distance of the solution jets from each other at the exit of the extrusion die is in the range from 0.22 to 0.7 mm.

6. Process according to any of the claims 1 to 5 **characterized in that** the tenside is added before the stage a) to the cellulose or in the stage a) or between the stages a) and b).

7. Process according to any of the claims 1 to 5 **characterized in that** the tenside is added in or after the stage b).

8. Process according to any of the claims 1 to 7 **characterized in that** a non-ionogenic tenside is used.

9. Process according to any of the claims 1 to 8 **characterized in that** the precipitation bath from the stage b) is regenerated to a purified aqueous amine oxide which is reused in the stage a).

10. Process according to claim 9 **characterized in that** the tenside is separated from the amine oxide solution in the course of the regeneration of the precipitation bath, and is reused in the stage b).

11. Process according to any of the claims 1 to 10 **characterized in that** the cellulose solution is extruded through a die having a hole density in the range from 1.8 to 20 mm⁻².

## Revendications

1. Procédé de fabrication de corps moulés cellulosiques, en particulier de fibres et de filaments, par
a) dissolution de cellulose dans une solution aqueuse d'un amino-oxyde tertiaire, en particulier de N-oxyde de N-morpholine, et
b) extrusion de la solution de cellulose au-travers d'un outil de formage, par un interstice d'air dans un bain de précipitation en faisant précipiter les corps moulés, la solution de cellulose et/ou le bain de précipitation contenant un tensio-actif,
**caractérisé en ce que** dans l'étape b), on travaille avec une teneur en tensio-actif c de la solution de cellulose et/ou du bain de précipitation dans l'intervalle de 100 ppm>c≥5 ppm, et avec une largeur d'interstice d'air de l'ordre de 2 à 20 mm.

2. Procédé selon la revendication 1, **caractérisé en ce que** la teneur en tensio-actif c se situe dans l'intervalle de 8 à 70 ppm.

3. Procédé selon la revendication 1 ou 2, **caractérisé en ce que** l'on travaille dans la solution de cellulose avec une teneur en tensio-actif c comprise dans l'intervalle de 70 ppm>c≥30 ppm.

4. Procédé selon l'une des revendications 1 à 3, **caractérisé en ce que** la largeur d'interstice d'air est de l'ordre de 2 à 8 mm.

5. Procédé selon l'une des revendications 1 à 4, **caractérisé en ce qu'**on travaille avec un écartement mutuel des jets de solution à la sortie de l'outil de formage compris dans l'intervalle de 0,22 à 0,7 mm.

6. Procédé selon l'une des revendications 1 à 5, **caractérisé en ce que** l'on additionne le tensio-actif à la cellulose avant l'étape a), ou dans l'étape a) ou entre les étapes a) et b) .

7. Procédé selon l'une des revendications 1 à 5, **caractérisé en ce qu'**on additionne le tensio-actif dans ou après l'étape b).

8. Procédé selon l'une des revendications 1 à 7, **caractérisé en ce qu'**on met en oeuvre un tensio-actif non-ionique.

9. Procédé selon l'une des revendications 1 à 8, **caractérisé en ce que** l'on régénère le bain de précipitation de l'étape b) pour former un amino-oxyde purifié contenant de l'eau, que l'on remet en oeuvre dans l'étape a).

10. Procédé selon la revendication 9, **caractérisé en ce que** l'on sépare le tensio-actif de la solution d'amino-oxyde au cours de la régénération du bain de précipitation, et le remet en oeuvre dans l'étape b).

11. Procédé selon l'une des revendications 1 à 10, **caractérisé en ce que** l'on extrude la solution de cellulose au travers d'un outil de formage avec une densité de perforations de l'ordre de 1,8 à 20 mm-².
